Europäisches Patentamt

**European Patent Office**

Office européen des brevets

(11) Publication number: **0 106 680**

**A2**

(12) # EUROPEAN PATENT APPLICATION

(21) Application number: **83306214.4**

(22) Date of filing: **13.10.83**

(51) Int. Cl.³: **G 09 F 9/30**
**G 02 B 5/16**

(30) Priority: **15.10.82 US 434682**

(43) Date of publication of application:
**25.04.84 Bulletin 84/17**

(84) Designated Contracting States:
**DE FR GB IT**

(71) Applicant: **THE BABCOCK & WILCOX COMPANY**
**1010 Common Street P.O. Box 60035**
**New Orleans Louisiana 70160(US)**

(72) Inventor: **Hipple, James H.**
**2950 Thrush Avenue**
**Lancaster Ohio 43130(US)**

(72) Inventor: **Smith, Don William**
**888 Houfek Drive**
**Lancaster Ohio 43130(US)**

(74) Representative: **Cotter, Ivan John et al,**
**D. YOUNG & CO. 10 Staple Inn**
**London WC1V 7RD(GB)**

(54) **Panel indicators.**

(57) A panel indicator (10) includes a light transmitting indicator rod (16) in engagement with an end (40) of a fibre optic cable (14). A portion of the rod (16) protrudes beyond a retaining housing (12) and has a conical depression (28) formed axially thereof to provide maximum radial dispersion of light from the rod for lateral viewing thereof.

FIG. 1

EP 0 106 680 A2

1

## PANEL INDICATORS

This invention relates to panel indicators.

Display devices employing fibre optics have become well known in many industries. In one form of such a device an optical signal, for example from a boiler water level indicator or the like, is transmitted along a length of fibre optic cable to a remote readout area, such as a control room, where the other end of the fibre optic cable terminates in a display panel.

In prior art display panels the readout display is in the form of a matte screen which is mounted at the end of the fibre optic cable and is effective to increase the output angle of the fibre optic cable from a normal $26^{\circ}$ output angle to an angle of $160^{\circ}$.

In many instances, however, it is necessary to view the display laterally, at an angle to the display which is greater than that afforded by a matte screen; therefore, it is desirable to have a fibre optic display which protrudes from the panel. While protruding translucent buttons which are illuminated from within are known, for example on illuminated button switches and the like, these are visible essentially from the end only, and do not disperse sufficient light laterally to serve as an efficient readout of this type. Also, in a fibre optic display wherein the fibre optic cable is quite long, there is a significant loss of light signal which makes it important to provide maximum dispersion of the light for lateral viewing.

According to the invention there is provided a panel indicator characterised by a housing and a light transmitting member received within the housing and having an end portion protruding therefrom, the light transmitting member having a conical depression formed in the protruding end portion.

A preferred embodiment of the present invention described hereinbelow solves or at least alleviates the aforementioned problems associated with the prior art by providing a panel indicator comprising a transparent member, preferably a cylindrical rod, which is, in use, connected to an end of a fibre optic cable, and which is capable of being received in a control panel with a portion of the cylindrical member protruding outwardly from the panel. The rod includes a polished end surface and an internal configuration which causes light entering the rod from the fibre optic cable to be dispersed to the side surface of the rod for lateral viewing. In accordance with a preferred feature of the invention, lateral dispersion is provided by forming a conical depression in the polished outer end of the rod and by frosting the surface of the depression and the side surface of the rod. The rod is received in a connector housing which retains a frusto-conical end portion of the rod in contact with or in very close proximity to the end of the fibre optic cable, and which is capable of being attached to a panel.

The invention will now be further described, by way of illustrative and non-limiting example, with reference to the accompanying drawing, in which:

Figure 1 is a cross-sectional view of a panel indicator or panel indicator assembly embodying the invention; and

Figure 2 is an elevational view of the indicator taken from the left hand side of Figure 1.

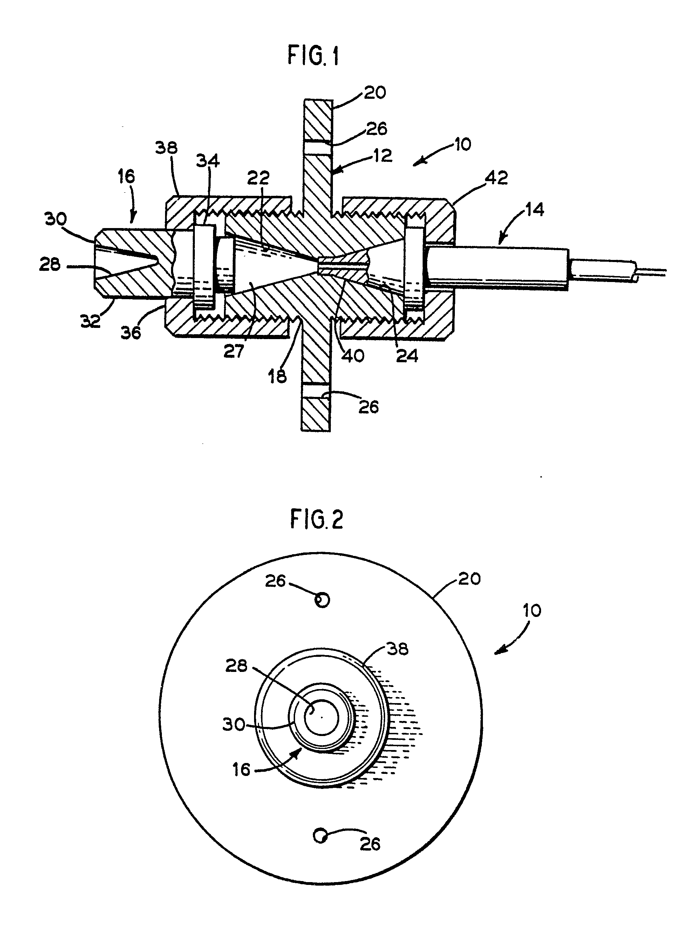

Figure 1 illustrates a panel indicator or indicator assembly 10 comprising a housing 12 capable of attachment to a control panel (not shown) and to a fibre optic cable 14; and a transparent indicator 16 retained within the housing.

The housing 12 serves to mount the indicator assembly 10 to a panel, and also to connect the indicator rod 16 to the fibre optic cable 14, and comprises an externally threaded hub portion 18 and a flange portion 20 generally centrally disposed relative to the hub portion. The housing 12 has first and second frusto-conical depressions 22 and 24 formed to extend axially inwardly from the ends of the hub portion 18 to receive end portions of the indicator rod 16 and the fibre optic cable 14, respectively, as will be described in more detail below. The flange portion 20 has a plurality of holes 26 formed therethrough to enable the housing to be attached to a control panel, although it will be appreciated that other means for attaching the assembly 10 to a panel can also be employed.

The indicator 16 comprises a generally cylindrical transparent member having a frusto-conical end portion 27 which is received in the depression 22. The end of the rod 16 which protrudes from the housing 12 has a conical depression 28 formed axially thereof. To provide maximum transmission of light axially through the rod 16, the end surface of the end portion 27 is polished, as is also an annular area 30 surrounding the opening of the conical depression 28. To provide maximum radial dispersion of light for lateral viewing of the display, the surface of the depression 28 and the outer side or diameter 32 of the protruding portion of the rod 16 are frosted.

The rod 16 includes an increased diameter portion 34 which is engaged by an inwardly directed lip 36 of a nut 38 which engages the hub portion 18 to retain the rod.

The fibre optic cable 14 is a well-known structure which will not be described in detail herein. The cable 14 has a frusto-conical end portion 40 which is received within the depression 24 and is retained therein by a nut 42 which is similar to the nut 38. The interior of the cable 14 includes a plurality of individual fibres, the ends of which are polished. When the indicator assembly 10 is assembled as shown in Figure 1, the polished interior ends of the rod 16 and the cable 14 are maintained in contact with each other or in very close proximity to each other by the clamping action of the nuts 38 and 42.

In operation, a light signal from a condition-indicating system or the like is transmitted along the fibre optic cable 14 to the panel indicator assembly 10, where it is transmitted to the indicator rod 16. The frosted surface of the conical depression 28 is illuminated by the transmitted light to provide good lateral vision of the indicator, and the light transmitted through the polished end surface 30 forms a bright ring of light which enhances the display as viewed from the end of the panel indicator assembly 10.

It should be noted that the materials from which the panel indicator assembly 10 is formed are not critical. For example, the indicator rod 16 can be formed of glass or of a transparent plastics material, and the housing 12, including the nuts 38 and 42, can be of metal or plastics.

## CLAIMS

1. A panel indicator (10) characterised by a housing (12) and a light transmitting member (16) received within the housing and having an end portion protruding therefrom, the light transmitting member (16) having a conical depression (28) formed in the protruding end portion.

2. A panel indicator according to claim 1, in which the light transmitting member (16) comprises a cylindrical member and the conical depression (28) is formed axially thereof.

3. A panel indicator according to claim 1 or claim 2, in which the housing (12) has a frusto-conical depression (22) formed therein and the light transmitting member (16) includes a frusto-conical portion (27) received within the frusto-conical depression (22).

4. A panel indicator according to claim 3, in which the light transmitting member (16) is transparent and the outer side (32) of the protruding end portion and the surface of the conical depression (28) are frosted.

5. A panel indicator according to claim 4, in which the end of the frusto-conical portion (27) of the light transmitting member (16) and the end surface (30) of the protruding end portion thereof are polished.

6. A panel indicator according to claim 5, including means (38, 42) engageable with the housing (12) and with the light transmitting member (16) to maintain the polished end of the frusto-conical portion (27) in engagement with or in very close proximity to a second light transmitting member (14).

7. A panel indicator according to any one of the preceding claims, in combination with a second light transmitting member (14) having an end portion in engagement therewith.

8.    A combination according to claim 7, in which the second light transmitting member (14) comprises a fibre optic cable.

9.    A panel indicator according to claim 3, claim 4 or claim 5, in combination with a fibre optic cable (14) having a frusto-conical end portion (40) in engagement with the frusto-conical portion (27) of the light transmitting member (16).

10.    A combination according to claim 9, including a second frusto-conical depression (24) formed in the housing (12) coaxially with the first-mentioned frusto-conical depression (22), the frusto-conical end portion (40) of the fibre optic cable (14) being received within the second frusto-conical depression (24).

FIG.1

FIG.2